# EUROPÄISCHE PATENTSCHRIFT

(11) **EP 0 371 236 B1**
(45) Veröffentlichungstag und Bekanntmachung des Hinweises auf die Patenterteilung: **13.04.1994**
(21) Anmeldenummer: 89118781.7
(22) Anmeldetag: 10.10.1989
(51) Int. Cl.: H02P 7/01, B25F 5/00, H05K 5/00

(54) **Stromversorgungseinheit**
Current supply unit
Unité d'alimentation électrique

(30) Priorität: 26.11.1988 DE 3839932
(43) Veröffentlichungstag der Anmeldung: 06.06.1990
(73) Patentinhaber: Festo KG, D-73734 Esslingen (DE)
(72) Erfinder: Behrens, Axel, D-7306 Denkendorf (DE); Fetzer, Gerhard, D-7306 Denkendorf (DE); Maier, Peter, D-7311 Neidlingen (DE)
(74) Vertreter: Vetter, Hans, Dipl.-Phys. Dr.

(56) Entgegenhaltungen:
- EP-A- 0 274 644
- DE-A- 3 323 464
- DE-U- 6 945 656
- DE-U- 8 704 713

## Beschreibung

Die Erfindung betrifft eine Stromversorgungseinheit mit einer Steckdose für wenigstens ein über ein Verbindungskabel daran anschließbares Elektrowerkzeug mit bürstenlosem Motor, insbesondere Asynchronmotor, wobei die Stromversorgungseinheit eine Einrichtung zur einstellbaren Vorgabe der Speisefrequenz aufweist.

Eine derartige Stromversorgungseinheit ist beispielsweise aus der DE-OS 37 09 983, der DE-OS 37 22 177, der DE-OS 37 26 262 und der DE-GM 87 04 713 bekannt. Zum Antrieb eines Elektrowerkzeugs mit einem solchen Motor wird eine gegenüber der Netzspannung veränderte, einstellbare Frequenz verwendet, so daß die Stromversorgungseinheit einen entsprechenden Frequenzumsetzer aufweisen muß. Bürstenlose Motoren, insbesondere Asynchronmotoren, haben eine steifere und damit günstigere Drehmoment-/ Drahzahlcharakteristik, das heißt, bei ansteigender Motorbelastung bleibt die Drehzahl im wesentlichen konstant. Die Standzeit eingesetzter Arbeitsmittel wird verbessert. Darüber hinaus ergibt sich ein wesentlich günstigeres Leistungsgewicht, so daß kräftigere, kompaktere Elektrowerkzeuge bzw. Handwerkzeugmaschinen hergestellt werden können. Der Nachteil besteht darin, daß eine Stromversorgungseinheit als separates Gerät immer erforderlich ist und beim Transport des Elektrowerkzeugs mitgeführt werden muß.

Bei der aus der DE-GM 87 04 713 bekannten Anordnung ist eine derartige Stromversorgungseinheit fest in einem Staubsauger eingebaut, wobei eine Ausgangsspannung mit erhöhter Frequenz über eine Steckdose am Gehäuse des Staubsaugers zur Verfügung gestellt wird. Das Elektrowerkzeug kann zur Stromversorgung in diese Steckdose eingesteckt werden, wobei ein Saugschlauch zur Absaugung von Spänen, Staub od.dgl. ebenfalls das Elektrowerkzeug mit dem Staubsauger verbindet. Diese Anordnung hat den Nachteil, daß die Stromversorgungseinheit nur in Verbindung mit dem Staubsauger verwendet werden kann, also daß der Staubsauger immer mitgeführt werden muß, auch wenn er nicht benötigt wird. Die Verwendung für andere Elektrowerkzeuge ist daher stark eingeschränkt.

Eine Aufgabe der vorliegenden Erfindung besteht daher darin, eine Stromversorgungseinheit der eingangs genannten Gattung zu schaffen, die sowohl in enger Verbindung mit Arbeitsgerätschaften, wie Staubsauger, Kabeltrommeln u.dgl., eingesetzt werden kann, jedoch auch unabhängig von diesen verwendbar ist.

Diese Aufgabe wird erfindungsgemäß dadurch gelöst, daß die Stromversorgungseinheit als Einschubgerät für verschiedene in Verbindung mit dem Elektrowerkzeug verwendbare, wenigstens einen entsprechenden Einschubkanal aufweisende Arbeitsgerätschaften ausgebildet ist, wobei eine mit der Steckdose, Steuer- und Kontrollelementen versehene vordere Gehäusewandung der Stromversorgungseinheit im eingeschobenen Zustand die Einschuböffnung des Einschubkanals im wesentlichen abschließt.

Diese Stromversorgungseinheit kann auf einfache Weise bei kombinierter Verwendung in die jeweilige Arbeitsgerätschaft, beispielsweise in einen Staubsauger, eingeschoben werden und bildet dadurch mit diesem eine kompakte Einheit. Andererseits kann diese Stromversorgungseinheit auch wieder schnell herausgezogen und in eine andere Arbeitsgerätschaft eingesteckt werden, wenn dies erforderlich ist. Darüber hinaus ist auch eine unabhängige Verwendung ohne jegliche Arbeitsgerätschaft möglich. Da derartige Stromversorgungseinheiten durch ihre aufwendige Technik einen hohen Preis aufweisen, ist diese variable Verwendung von besonderem Vorteil. Durch die Möglichkeit des Einschiebens in verschiedene Arbeitsgerätschaften ist auch die Verwendung für verschiedenartige Elektrowerkzeuge möglich, die den jeweiligen Arbeitsgerätschaften zugeordnet sind. Auch ein Auswechseln bei einem Defekt der Arbeitsgerätschaft oder der Stromversorgungseinheit ist schnell und einfach möglich. Die so verwendeten Arbeitsgerätschaften können kostengünstiger hergestellt werden, da lediglich ein Einschubkanal mit einer entsprechenden Spannungsversorgung bereitgestellt werden muß.

Durch die in den Unteransprüchen aufgeführten Maßnahmen sind vorteilhafte Weiterbildungen und Verbesserungen der im Anspruch 1 angegebenen Stromversorgungseinheit möglich.

Besonders zweckmäßig haben sich Führungselemente an der Stromversorgungseinheit und vorzugsweise auch am Einschubkanal erwiesen, die zusammenwirken, also beispielsweise als Profilnuten und in diese eingreifende, entsprechend geformte Profilleisten ausgebildet sind. Hierdurch kann die Stromversorgungseinheit präzise in den Einschubkanal eingeschoben werden, und es besteht keine Gefahr eines Verrutschens oder Verkantens. Gleichzeitig wird eine sichere Positionierung in der jeweiligen Arbeitsgerätschaft erreicht, wobei zur zusätzlichen Sicherung noch wenigstens ein fixierendes Rast- oder Halteelement vorgesehen sein kann.

Sind derartige Stromversorgungseinheiten mit einem solchen Führungselement an der Unterseite und mit einem als Gegenstück dienenden Führungselement an einer entsprechenden Position an der Oberseite versehen, so können mehrere Stromversorgungseinheiten übereinander gegenseitig fixiert werden. Dieselben Führungselemente dienen gleichzeitig zur Fixierung im Einschubkanal einer Arbeitsgerätschaft.

Durch einen umklappbaren und/oder versenkbaren Tragegriff an der Oberseite ist ein leichter Transport einer Stromversorgungseinheit oder mehrerer aneinander fixierter Stromversorgungseinheiten möglich.

Zum Einschieben und Herausschieben aus dem Einschubkanal erweist sich wenigstens ein Haltegriff an der vorderen Gehäusewandung als besonders günstig.

Sieht man einerseits ein ortsfest angeordnetes Steckverbindungselement zur Netzversorgung an der der vorderen Gehäusewandung gegenüberliegenden Rückwandung der Stromversorgungseinheit und andererseits ein im Endbereich des Einschubkanals im eingeschobenen Zustand an dieses Steckverbindungselement elektrisch ankuppelndes, die Netzspannung führendes Gegen-Steckverbindungselement vor, so können durch einfaches Einschieben der Stromversorgungseinheit automatisch die elektrischen Versorgungsanschlüsse hergestellt und beim Herausziehen wieder getrennt werden. Dies erlaubt ein besonders schnelles und einfaches Auswechseln von Stromversorgungseinheiten.

Alternativ hierzu kann auch an der Rückwand der Stromversorgungseinheit oder im Endbereich des Einschubkanals eine Kabelaufwickelvorrichtung angeordnet sein, wobei dann im Endbereich des Einschubkanals bzw. an der Rückwandung ein Steckverbindungselement zur Verbindung mit einem am Kabelende angeordneten Steckverbindungselement vorgesehen ist. Hierbei wird zunächst unter Abwickeln des Kabels und Einstecken des Steckverbindungselements die elektrische Verbindung hergestellt, wonach dann beim Einschieben der Stromversorgungseinheit in den Einschubkanal eine automatische Aufwicklung des Kabels ohne Gefahr eines Verklemmens dieses Kabels erfolgt.

Eine größere Arbeitsgerätschaft, beispielsweise ein Staubsauger, ein Werkstattwagen oder ein Wartungsfahrzeug, kann auch mehrere Einschubkanäle zur Aufnahme mehrerer Stromversorgungseinheiten aufweisen. Hierdurch wird der gleichzeitige Betrieb mehrerer Elektrowerkzeuge über die Arbeitsgerätschaft ermöglicht.

Ist die Arbeitsgerätschaft ein Staubsauger, so weist dieser zweckmäßigerweise einen Saugschlauchanschluß im Bereich des Einschubkanals auf, vorzugsweise unmittelbar neben der Steckdose der eingeschobenen Stromversorgungseinheit. Hierdurch wird eine Parallelführung des Saugschlauchs und der elektrischen Verbindungsleitung ermöglicht, die vorzugsweise mechanisch aneinander gekuppelt sein können.

Besonders vorteilhaft ist auch der Einsatz von Stromversorgungseinheiten in Arbeitsgerätschaften wie Kabeltrommeln, Werkzeugkoffern, Wandhalterungen oder Wandgehäusen für wenigstens ein Elektrowerkzeug sowie für Werkstattwagen oder Wartungsfahrzeuge.

Insbesondere bei beweglichen Arbeitsgerätschaften, wie Werkzeugkoffer, Werkstattwagen od.dgl., besitzen diese zweckmäßigerweise entweder ein Netzkabel-Steckverbindungselement, an das ein loses Netzkabel anschließbar ist, oder bei einem fest angeschlossenen Netzkabel ist dieses aufrollbar ausgebildet, wobei der Netzkabelstecker zweckmäßigerweise in der Arbeitsgerätschaft versenkbar ausgebildet ist. Hierdurch kann die Arbeitsgerätschaft sehr schnell und einfach an das Stromnetz angeschlossen und wieder gelöst werden, wobei das Netzkabel kein Transportproblem mehr darstellt.

Ausführungsbeispiele der Erfindung sind in der Zeichnung dargestellt und in der nachfolgenden Beschreibung näher erläutert. Es zeigen:
- Fig. 1: zwei in einen Staubsauger eingesetzte Stromversorgungseinheiten, wobei eine Handkreissäge angeschlossen ist,
- Fig. 2: eine Stromversorgungseinheit in einer Ansicht schräg von hinten,
- Fig. 3: eine in eine Kabeltrommel eingesetzte Stromversorgungseinheit und
- Fig. 4: eine in einen Werkzeugkoffer für ein Elektrowerkzeug eingesetzte Stromversorgungseinheit.

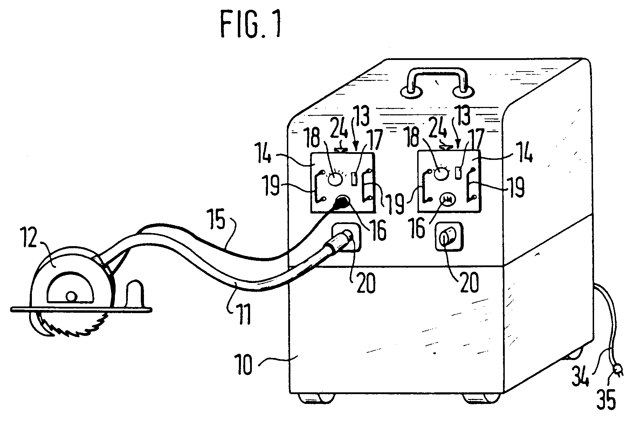

In Fig. 1 ist ein Staubsauger 10 dargestellt, über den in an sich bekannter Weise über einen Saugschlauch 11 ein Elektrowerkzeug 12 angeschlossen ist, das bei diesem Ausführungsbeispiel als Handkreissäge ausgebildet ist. Selbstverständlich können auch andere Elektrowerkzeuge angeschlossen werden, bei denen Staub, Späne od.dgl. abgesaugt werden sollen.

In den als fahrbare Arbeitsgerätschaft ausgebildeten Staubsauger 10 sind im oberen Bereich zwei Stromversorgungseinheiten 13 eingesetzt, und zwar in entsprechend geformte Einschubkanäle. Eine Frontplatte 14 der Stromversorgungseinheiten verschließt im eingeschobenen Zustand jeweils den Einschubkanal.

Die Stromversorgungseinheiten dienen zur Versorgung des über ein Verbindungskabel 15 und eine Steckdose 16 an der Frontplatte 14 angeschlossenen Elektrowerkzeugs 12 mit einer Versorgungsspannung bzw. einem Versorgungsstrom höherer Frequenz zum Betrieb eines bürstenlosen Motors, insbesondere Asynchronmotors, im Elektrowerkzeug 12. An der Frontplatte 14 ist jeweils noch ein Schalter 14 und eine Einstellvorrichtung 18 für die Drehzahl vorgesehen. Weitere und auch alternative Vorrichtungen zur Einstellung, Regelung und/oder Anpassung der Drehzahl bzw. Frequenz an die jeweiligen Erfordernisse können entsprechend dem angegebenen Stand der Technik ausgebildet sein. Zwei Haltegriffe 19 dienen zum leichteren Einschieben und Herausziehen der Stromversorgungseinheiten aus dem Staubsauger.

Sauganschlüsse 20 für den Saugschlauch 11 sind jeweils unterhalb den Einschubkanälen für die Stromversorgungseinheiten 13 am Gehäuse des Staubsaugers 10 angeordnet, und zwar möglichst nahe an den Steckdosen 16, um eine gemeinsame Führung des Saugschlauches 11 und des Verbindungskabels 15 zum Elektrowerkzeug 12 zu gestatten. Der Saugschlauch 11 und das Verbindungskabel 15 können daher auch als einheitliche, kombinierte Verbindungsleitung ausgebildet sein.

Die in der Zeichnung an der rechten Seite dargestellte Stromversorgungseinheit 13 ist nicht mit einem Elektrowerkzeug verbunden, bietet jedoch die Möglichkeit, ein gleichartiges oder anderes Elektrowerkzeug, wie ein Schleifgerät, ein Hobelgerät, eine Stichsäge od.dgl., anzuschließen und gemeinsam über den Staubsauger zu betreiben. Es ist auch möglich, nur eine einzige oder weitere Stromversorgungseinheiten vorzusehen.

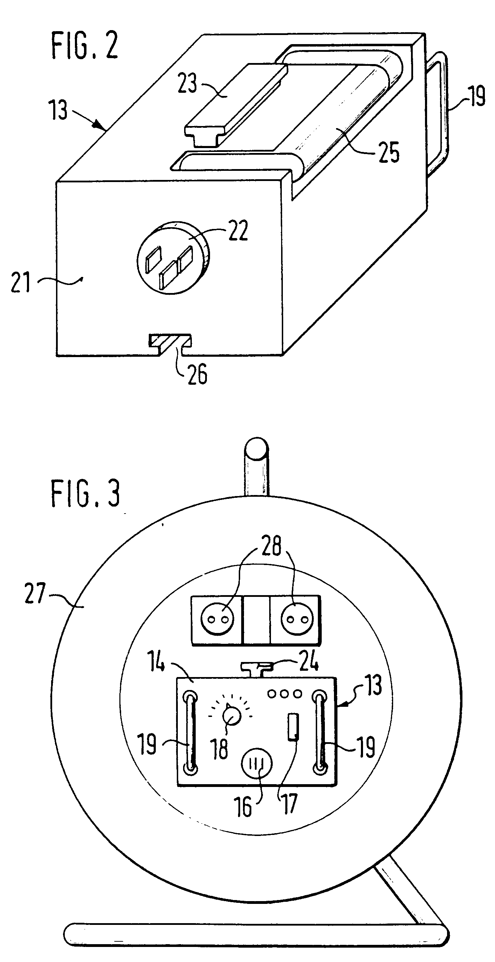

Wie aus der Rückansicht der Stromversorgungseinheit 13 gemäß Fig. 2 hervorgeht, weist deren Rückwandung 21 ein starres elektrisches Steckverbindungselement 22 auf, wobei (in der Zeichnung nicht erkennbar) an der entsprechenden Stelle im hinteren Bereich des Einschubkanals im Staubsauger 10 ein entsprechendes Gegen-Steckverbindungselement vorgesehen ist, so daß beim Einschieben der Stromversorgungseinheit in den Staubsauger 10 gleichzeitig und automatisch die Netzverbindung der Stromversorgungseinheit hergestellt ist.

Zur exakten Einführung und zum sicheren Halt der Stromversorgungseinheit 13 im Einschubkanal ist an der Oberseite der Stromversorgungseinheit 13 eine T-förmige Profilleiste 23 als Führungselement vorgesehen, die in eine entsprechend geformte Profilnut 24 oberhalb des Einschubkanals beim Einschieben eingreift. Nicht dargestellte Rast- oder Verriegelungselemente können zur zusätzlichen Verriegelung der eingeschobenen Stromversorgungseinheit dienen. Ein umklappbarer und in der Stromversorgungseinheit 13 im umgeklappten Zustand versenkter Tragegriff 25 ist zusätzlich an der Oberseite der Stromversorgungseinheit 13 zur Erleichterung des Transports derselben angeordnet. Dabei umgreift der Tragegriff 25 die Profilleiste 23. Selbstverständlich ist es auch möglich, den Tragegriff 25 mit einer Profilleiste zu verbinden oder beispielsweise die Profilleiste über den Tragegriff 25 hinaus zu verlängern.

Eine dem Profil der Profilleiste 23 entsprechende Profilnut 26 an der Unterseite der Stromversorgungseinheit 13 dient dazu, mehrere Stromversorgungseinheiten 13 durch Einschieben von Profilleisten in diese Profilnuten 26 miteinander zu verbinden und gemeinsam mittels des Tragegriffs 25 zu transportieren. Dabei kann zusätzlich oder alternativ auch eine entsprechend geformte Profilleiste an der Unterseite des Einschubkanals vorgesehen sein, die beim Einschieben der Stromversorgungseinheit in diese Profilnut 26 eingreift.

Wird die Stromversorgungseinheit 13 unabhängig vom Staubsauger 10 eingesetzt, so muß das Steckverbindungselement 22 über ein Verbindungskabel mit einer Netzsteckdose verbunden werden.

Alternativ zu der beschriebenen Art der Netzverbindung kann auch an der Rückwandung der Stromversorgungseinheit 13 oder im hinteren Bereich der Einschubkanäle ein fest angeschlossenes Netzkabel mit einer Aufrollvorrichtung vorgesehen sein. Ist dieses Netzkabel beispielsweise an der Stromversorgungseinheit 13 vorgesehen, so wird zunächst durch teilweises Abrollen dieses Netzkabels und Einstecken in eine entsprechende Steckdose im hinteren Bereich des Einschubkanals die elektrische Verbindung hergestellt, und dann kann die Stromversorgungseinheit 13 in den Einschubkanal eingeschoben werden, wobei sich das Kabel automatisch aufrollt. Entsprechendes gilt, wenn die Verbindung durch Abrollen eines Kabels im hinteren Bereich des Einschubkanals und durch Einstecken in das Steckverbindungsteil 22 hergestellt wird. Im einfachsten Falle kann auch auf eine Aufrollvorrichtung verzichtet werden.

Insbesondere im Falle eines festen Verbindungskabels mit oder ohne Aufrollvorrichtung kann auch auf eine Führung der Stromversorgungseinheit 13 mittels Profilnuten und Profilleisten verzichtet werden, wobei dann die Stromversorgungseinheit lediglich nach Art einer Garage in den Einschubkanal eingeschoben wird und dort entweder durch die Führung der Seitenwandungen oder allein durch ihr Gewicht fixiert bleibt.

Bei dem in Fig. 3 dargestellten Ausführungsbeispiel ist die Stromversorgungseinheit 13 in einen entsprechenden Einschubkanal im mittleren Bereich einer Kabeltrommel 27 eingeschoben. Auch hier kann wiederum die Netzversorgung für die Stromversorgungseinheit 13 auf eine der beschriebenen Arten hergestellt werden. Zur Fixierung in der Kabeltrommel 27 sind bei diesem Ausführungsbeispiel jedoch Führungselemente wie Profilnuten und Profilleisten in jedem Falle empfehlswert, da sich bei manchen Ausführungen einer Kabeltrommel 27 die Stromversorgungseinheit 13 mit der Trommel dreht.

Zwei zusätzliche Netzsteckdosen 28 oberhalb des Einschubkanals dienen zum Anschluß weiterer Verbraucher an das Stromnetz. Durch diese Kabeltrommel wird dadurch neben der regulären Netzspannung noch eine Spannung mit veränderter, einstellbarer Frequenz zum Anschluß von Elektrowerkzeugen mit bürstenlosem Motoren bereitgestellt.

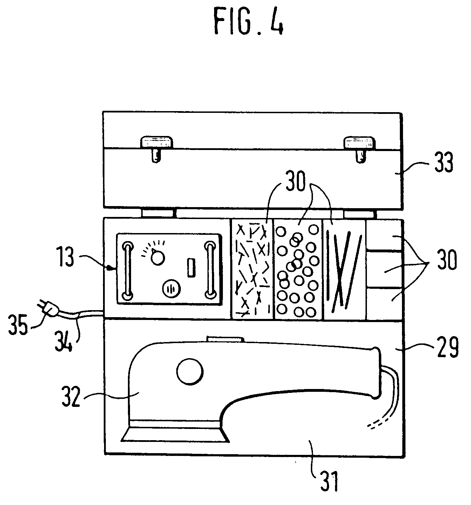

Bei dem in Fig. 4 dargestellten Ausführungsbeispiel ist die Stromversorgungseinheit 13 in einen entsprechenden Führungskanal in einem Werkzeugkoffer 29 eingeschoben. Der Werkzeugkoffer weist Fächer 30 zur Aufnahme von Kleinwerkzeugen, Schrauben, Nägeln, Scheiben od.dgl. auf sowie ein größeres Fach 31 zur Aufnahme eines Elektrowerkzeugs 32, das hier als Schleifgerät ausgebildet ist. Ein Deckel 33 dient zum Verschließen des Werkzeugkoffers 29. Ein Netzkabel 34 an der Außenseite des Werkzeugkoffers 29 ist entweder dort anschließbar, oder es ist dort eine versenkte Aufwickelvorrichtung sowie eine Ausnehmung zur Aufnahme eines Steckers 35 des Netzkabels 34 vorgesehen.

In Abwandlung des in Fig. 4 dargestellten Ausführungsbeispiels kann die Stromversorgungseinheit 13 auch in eine Seitenwandung des Werkzeugkoffers 29 einschiebbar ausgebildet sein. Dies hat den Vorteil, daß das Elektrowerkzeug 32 auch bei geschlossenem Deckel 30 eingesteckt werden kann. Weiterhin ist es auch möglich, unter Beibehaltung des in Fig. 4 dargestellten Anbringungsorts im Deckel 33 Durchstecköffnungen vorzusehen, die einen Zugang zur Steckdose 16 oder zu anderen Bedienungs- und/oder Kontrollelementen gestattet.

In nicht dargestellter Weise können eine oder mehrere Stromversorgungseinheiten 13 auch in Einschubkanäle von Wandhalterungen und Wandgehäusen für Elektrowerkzeuge mit bürstenlosem Motor oder von Werkstattwagen und Wartungsfahrzeugen eingesteckt werden, auf denen oder in denen derartige Elektrowerkzeuge transportiert werden, so daß auf einfache Weise die entsprechende Stromversorgung sichergestellt ist und eine Beschädigung der Stromversorgungseinheiten weitgehend verhindert werden kann. Ein Einsatz in weiteren ähnlichen Arbeitsgerätschaften ist selbstverständlich ebenfalls möglich. Wesentlich ist dabei, daß die jeweiligen Stromversorgungseinheiten in variabler Weise entweder separat oder in diesen Arbeitsgerätschaften eingesetzt und dabei fixiert und gesichert eingesetzt werden können, wobei auch ein schneller und einfacher Austausch möglich ist.

Wie aus dem eingangs angegebenen Stand der Technik hervorgeht, enthält die Stromversorgungseinheit elektronische Leistungsbauelemente, insbesondere Leistungshalbleiterschalter, für die Kühlkörper erforderlich sind. Zur Gewährleistung einer ausreichenden Kühlung werden diese Kühlkörper vorzugsweise an der vorderen Gehäusewandung 14, also an der nach außen weisenden Frontplatte, angeordnet. Dies kann entweder dadurch erfolgen, daß diese Kühlkörper an der Innenseite dieser vorderen Gehäusewandung 14 angeordnet sind und die Gehäusewandung selbst zumindest teilweise als Kühlkörper ausgebildet ist, das heißt mit Kühlrippen versehen ist, oder daß die Kühlkörper durch Öffnungen aus dieser vorderen Gehäusewandung 14 nach außen überstehen oder von außen daran befestigt sind.

## Patentansprüche

1. Stromversorgungseinheit (13) mit einer Steckdose (16) für wenigstens ein über ein Verbindungskabel (15) daran anschließbares Elektrowerkzeug (12) mit bürstenlosem Motor, insbesondere Asynchronmotor, wobei die Stromversorgungseinheit eine Einrichtung zur einstellbaren Vorgabe der Speisefrequenz aufweist, dadurch gekennzeichnet, daß die Stromversorgungseinheit (13) als Einschubgerät für in Verbindung mit dem Elektrowerkzeug (12, 32) verwendbare, wenigstens einen entsprechenden Einschubkanal aufweisende, verschiedene Arbeitsgerätschaften(10, 27, 29) ausgebildet ist, wobei eine mit der Steckdose (16), Steuer- und Kontrollelementen (17, 18) versehene vordere Gehäusewandung (14) der Stromversorgungseinheit (13) im eingeschobenen Zustand die Einschuböffnung des Einschubkanals im wesentlichen abschließt.

2. Stromversorgungseinheit nach Anspruch 1, dadurch gekennzeichnet, daß sie mit Führungselementen (24) am Einschubkanal oder mit Führungselementen (26) an einer anderen entsprechenden Stromversorgungseinheit (13) zusammenwirkende Führungselemente (23) aufweist, die vorzugsweise als Profilnuten (24, 26) und in diese eingreifende, entsprechend geformte Profilleisten ausgebildet sind.

3. Stromversorgungseinheit nach Anspruch 2, dadurch gekennzeichnet, daß sie mit einem Führungselement (26) an der Unterseite und mit einem als Gegenstück dienenden Führungselement (23) an einer entsprechenden Position an der Oberseite versehen ist.

4. Stromversorgungseinheit nach Anspruch 2 oder 3, dadurch gekennzeichnet, daß wenigstens ein lösbares, die Stromversorgungseinheit (13) im eingeschobenen Zustand fixierendes Rast- oder Halteelement vorgesehen ist.

5. Stromversorgungseinheit nach einem der vorhergehenden Ansprüche, gekennzeichnet durch einen umklappbaren und/oder versenkbaren Tragegriff (25) an der Oberseite und/oder wenigstens einen Haltegriff (19) an der vorderen Gehäusewandung (14).

6. Stromversorgungseinheit nach einem der vorhergehenden Ansprüche, gekennzeichnet durch ein ortsfest angeordnetes Steckverbindungselement (22) zur Netzversorgung an der der vorderen Gehäuse-wandung (14) gegenüberliegenden Rückwandung (21), wobei im Endbereich des Einschubkanals ein im eingeschobenen Zustand der Stromversorgungseinheit an dieses Steckverbindungselement (22) elektrisch ankuppelndes, die Netzspannung führendes Gegen-Steckverbindungselement vorgesehen ist.

7. Stromversorgungseinheit nach einem der Ansprüche 1 bis 5, dadurch gekennzeichnet, daß an ihrer Rückwandung (21) oder im Endbereich des Einschubkanals eine Kabelaufwickelvorrichtung angeordnet ist, und daß im Endbereich des Einschubkanals oder an der Rückwandung (21) ein Steckverbindungselement zur Verbindung mit einem am Kabelende angeordneten Steckverbindungselement vorgesehen ist.

8. Stromversorgungseinheit nach einem der vorhergehenden Ansprüche, gekennzeichnet durch mehrere Einschubkanäle zur Aufnahme mehrerer Stromversorgungseinheiten an einer Arbeitsgerätschaft.

9. Stromversorgungseinheit nach einem der vorhergehenden Ansprüche, dadurch gekennzeichnet, daß die Arbeitsgerätschaft (10) ein Staubsauger ist, wobei ein Saugschlauchanschluß (20) im Bereich des Einschubkanals, vorzugsweise unmittelbar neben der Steckdose (20) der eingeschobenen Stromversorgungseinheit (13) angeordnet ist.

10. Stromversorgungseinheit nach einem der Ansprüche 1 bis 8, dadurch gekennzeichnet, daß die Arbeitsgerätschaft (27) eine Kabeltrommel ist, daß der Einschubkanal im zentralen Bereich der Kabeltrommel angeordnet ist und daß vorzugsweise neben dem Einschubkanal wenigstens eine Netzspannungs-Steckdose (28) angeordnet ist.

11. Stromversorgungseinheit nach einem der Ansprüche 1 bis 8, dadurch gekennzeichnet, daß die Arbeitsgerätschaft (29) ein Werkzeugkoffer, eine Wandhalterung, ein Wandgehäuse für wenigstens ein Elektrowerkzeug (32) mit bürstenlosem Motor ein Werkstattwagen oder ein Wartungsfahrzeug ist, und daß sie vorzugsweise in eine seitliche Außenwandung der Arbeitsgerätschaft einschiebbar ist.

12. Stromversorgungseinheit nach einem der vorhergehenden Ansprüche, dadurch gekennzeichnet, daß die Arbeitsgerätschaft (10, 29) mit einem insbesondere aufrollbar ausgebildeten Netzkabel (34) oder einem Netzkabel-Steckverbindungselement versehen ist, wobei vorzugsweise der Netzkabelstecker (35) in der Arbeitsgerätschaft (10, 29) versenkbar ausgebildet ist.

13. Stromversorgungseinheit nach einem der vorhergehenden Ansprüche, dadurch gekennzeichnet, daß zur Kühlung von elektronischen Leistungsbauteilen erforderliche Kühlkörper an der vorderen Gehäusewandung (14) angeordnet sind, wobei vorzugsweise die Leistungsbauteile über Wärmebrücken mit der Innenseite der wenigstens teilweise als Kühlkörper ausgebildeten vorderen Gehäusewandung (14) verbunden sind oder wobei die Kühlkörper durch Öffnungen in der vorderen Gehäusewandung (14) aus der Stromversorgungseinheit herausragen oder an der Außenseite der vorderen Gehäusewandung (14) befestigt sind.

## Claims

1. Power supply unit (13) with a socket (16) for at least one power tool (12), connectable to it by a connection cable (15), said power tool having a brushless motor, in particular an asynchronous motor, wherein the power supply unit has a device which permits presetting of the supply frequency, characterized in that the power supply unit (13) is designed as a plug-in unit for various items of equipment (10, 27, 29) having at least one corresponding plug-in channel and usable in conjunction with the power tool (12, 32), wherein a front housing wall (14) of the power supply unit (13) provided with the socket (16), control and monitoring elements (17, 18), essentially closes the plug-in port of the plug-in channel in the plugged-in state.

2. Power supply unit according to claim 1, characterized in that it has guide elements (23) which act in conjunction with guide elements (24) on the plug-in channel or with guide elements (26) on another corresponding power supply unit (13), said guide elements preferably being in the form of profiled grooves (24, 26) in which suitably-shaped profiled rails engage.

3. Power supply unit according to claim 2, characterized in that it is provided with one guide element (26) on the underside and with a guide element (23) serving as counterpart at a corresponding position on the upper side.

4. Power supply unit according to claim 2 or 3, characterized in that one or more releasable locking or retaining elements, fixing the power supply unit (13) in the plugged-in state, are provided.

5. Power supply unit according to any of the preceding claims, characterized by a carrying handle (25) on the top which can be folded down and/or recessed, and/or at least one handle (19) on the front housing wall (14).

6. Power supply unit according to any of the preceding claims, characterized by a connector element (22) for the mains supply fixed to the rear wall (21) opposite the front housing wall (14), wherein a mating connector element supplying the mains voltage, electrically connectable to this connector element (22) in the plugged-in state of the power supply unit, is provided in the end area of the plug-in channel.

7. Power supply unit according to any of claims 1 to 5, characterized in that a cable reel unit is mounted on its rear wall (21) or in the end area of the plug-in channel, and that in the end area of the plug-in channel or on the rear wall (21) is provided a connector element for connection with a connector element located at the cable end.

8. Power supply unit according to any of the preceding claims, characterized by several plug-in channels to accommodate several power supply units on one item of equipment.

9. Power supply unit according to any of the preceding claims, characterized in that the item of equipment (10) is a vacuum cleaner, wherein one vacuum hose connection (20) is located in the area of the plug-in channel, preferably directly adjacent to the socket (20) of the plugged-in power supply unit (13).

10. Power supply unit according to any of claims 1 to 8, characterized in that the item of equipment (27) is a cable drum, that the plug-in channel is located in the central area of the cable drum, and that preferably at least one mains voltage socket (28) is located next to the plug-in channel.

11. Power supply unit according to any of claims 1 to 8, characterized in that the item of equipment (29) is a tool kit, a wall mounting, a wall housing for at least one power tool (32) with brushless motor, a tool and gear truck or a maintenance vehicle, preferably pluggable into a side outer wall of the item of equipment.

12. Power supply unit according to any of the preceding claims, characterized in that the item of equipment (10, 29) is provided with a mains cable (34), in particular reelable, or a mains cable connector element, wherein the mains cable connector (35) is preferably recessable in the item of equipment (10, 29).

13. Power supply unit according to any of the preceding claims, characterized in that heat sinks necessary for the cooling of electronic power components are located on the front housing wall (14), wherein preferably the power components are connected via thermal bridges to the inside of the front housing wall (14) designed at least partially as a heat sink, or wherein the heat sinks protrude from the power supply unit through openings in the front housing wall (14) or are attached to the outside of the front housing wall (14).

## Revendications

1. Ensemble d'alimentation électrique (13), avec une prise femelle (16) pour au moins un outil électrique (12), à moteur sans balais, susceptible de lui être raccordé par l'intermédiaire d'un câble de liaison (15), le moteur étant en particulier un moteur asynchrone, l'ensemble d'alimentation électrique présentant un dispositif d'allocation réglable de la fréquence d'alimentation, caractérisé en ce que l'ensemble d'alimentation électrique (13) est réalisé sous forme d'appareil à encastrer pour différents réceptacles à outils (10, 27, 29) présentant au moins un canal d'encastrement correspondant, utilisables en liaison avec l'outil électrique (12, 32), une paroi de carter (14) avant, pourvue de la prise femelle (16), des éléments de commande et de contrôle (17, 18) de l'ensemble d'alimentation électrique (13), délimitant pour l'essentiel, à l'état encastré, l'ouverture d'encastrement du canal d'encastrement.

2. Ensemble d'alimentation électrique selon la revendication 1, caractérisé en ce qu'il présente des éléments de guidage (23), coopérant avec des éléments de guidage (24) situés sur le canal d'encastrement ou avec des éléments de guidage (26) situés sur un autre ensemble d'alimentation électrique (13) correspondant, réalisés de préférence sous forme de rainures profilées (24, 26) et de bandes profilées, s'engageant dans celles-ci et ayant une forme correspondante.

3. Ensemble d'alimentation électrique selon la revendication 2, caractérisé en ce qu'il est pourvu d'un élément de guidage (26) placé en face inférieure et d'un élément de guidage (23), servant de pièce conjuguée, situé en une position correspondante en face supérieure.

4. Ensemble d'alimentation électrique selon la revendications 2 ou 3, caractérisé en ce qu'est prévu au moins un élément à cliquet ou élément de maintien, désolidarisable, assurant la fixation de l'ensemble d'alimentation électrique (13) à l'état encastré.

5. Ensemble d'alimentation électrique selon l'une des revendications précédentes, caractérisé par une poignée de portage (25), rabattable et/ou escamotable, en face supérieure et/ou au moins une poignée de maintien (19), sur la paroi avant (14) du carter.

6. Ensemble d'alimentation électrique selon l'une des revendications précédentes, caractérisé par un élément de liaison à enfichage (22) monté fixe, pour assurer l'alimentation par le réseau sur la paroi arrière (21) opposée à la paroi avant (14) du carter, un élément de liaison à enfichage conjugué, amenant la tension du réseau, s'accouplant électriquement à cet élément de liaison par enfichage (22), lorsque l'ensemble d'alimentation électrique est à l'état encastré, étant prévu dans la zone d'extrémité du canal d'encastrement.

7. Ensemble d'alimentation électrique selon l'une des revendications 1 à 5, caractérisé en ce qu'un dispositif d'enroulement de câble est disposé sur sa paroi arrière (21) ou dans la zone d'extrémité du canal d'encastrement, et en ce que, dans la zone d'extrémité du canal d'encastrement ou sur la paroi arrière (21) est prévu un élément de liaison à enfichage, pour assurer la liaison avec un élément de liaison à enfichage disposé à l'extrémité de câble.

8. Ensemble d'alimentation électrique selon l'une des revendications précédentes, caractérisé par plusieurs canaux d'encastrement, destinés à recevoir plusieurs ensembles d'alimentation électrique sur un réceptacle à outils.

9. Ensemble d'alimentation électrique selon l'une des revendications précédentes, caractérisé en ce que le réceptacle à outils (10) est un aspirateur à poussière, un raccordement pour tuyau d'aspiration (20) étant disposé dans la zone du canal d'encastrement, de préférence directement à côté de la prise femelle (16) de l'ensemble d'alimentation électrique (13).

10. Ensemble d'alimentation électrique selon l'une des revendications 1 à 8, caractérisé en ce que le réceptacle à outils (27) est un tambour à câble, en ce que le canal d'encastrement est disposé dans la zone centrale du tambour à câble et en ce que, de préférence, au moins une prise femelle (28) est disposée à côté du canal d'encastrement.

11. Ensemble d'alimentation électrique selon l'une des revendications 1 à 8, caractérisé en ce que le réceptacle à outils (29) est un coffre à outils, une fixation murale, un carter mural, pour au moins un outil électrique (32), avec un moteur sans balai, un chariot d'atelier ou un véhicule d'entretien, et en ce qu'il est de préférence encastrable dans une paroi extérieure latérale du réceptacle à outils.

12. Ensemble d'alimentation électrique selon l'une des revendications précédentes, caractérisé en ce que le réceptacle à outils (10, 29) est pourvu d'un câble de raccordement au réseau (34), en particulier enroulable, ou d'un élément de liaison à enfichage pour câble de réseau, la prise mâle (35) de câble de réseau étant de préférence réalisée escamotable dans le réceptacle à outils (10, 29).

13. Ensemble d'alimentation électrique selon l'une des revendications précédentes, caractérisé en ce que des corps de refroidissement, nécessaires pour assurer le refroidissement de composants de puissance électroniques, sont disposés sur la paroi avant (14) du carter, les composants de puissance étant de préférence reliés, par l'intermédiaire de ponts thermiques, à la face intérieure de la paroi avant (14) du carter, réalisée au moins partiellement sous forme de corps de refroidissement, et les corps de refroidissement passant à travers des ouvertures ménagées dans la paroi avant (14) du carter, en sortant de l'ensemble d'alimentation électrique, ou fixés en face extérieure de la paroi avant (14) du carter.
